(19) Europäisches Patentamt
European Patent Office
Office européen des brevets

(11) EP 1 448 633 B2

(12) NEW EUROPEAN PATENT SPECIFICATION
After opposition procedure

(45) Date of publication and mention of the opposition decision:
**13.06.2012 Bulletin 2012/24**

(45) Mention of the grant of the patent:
**26.04.2006 Bulletin 2006/17**

(21) Application number: **02779649.9**

(22) Date of filing: **31.10.2002**

(51) Int Cl.:
***C08F 210/16*** (2006.01) ***C08F 297/08*** (2006.01)
***C08F 2/14*** (2006.01)

(86) International application number:
**PCT/GB2002/004934**

(87) International publication number:
**WO 2003/037941 (08.05.2003 Gazette 2003/19)**

(54) **TWO-STEP POLYMERIZATION PROCESS**

ZWEISTUFEN-POLYMERISATIONSVERFAHREN

PROCEDE DE POLYMERISATION EN DEUX ETAPES

(84) Designated Contracting States:
**AT BE BG CH CY CZ DE DK EE ES FI FR GB GR IE IT LI LU MC NL PT SE SK TR**

(30) Priority: **31.10.2001 GB 0126147**

(43) Date of publication of application:
**25.08.2004 Bulletin 2004/35**

(73) Proprietor: **Borealis Technology Oy**
**06101 Porvoo (FI)**

(72) Inventors:
- **KALLIO, Kalle**
  **FIN-06100 Porvoo (FI)**
- **KINNUNEN, Esa**
  **FIN-06100 Porvoo (FI)**
- **LEHTINEN, Arja**
  **FIN-00530 Helsinki (FI)**
- **MALMBERG, Anneli**
  **FIN-01120 Västerskog (FI)**
- **ORA, Marja**
  **FIN-01390 Vantaa (FI)**

(74) Representative: **Campbell, Neil Boyd**
**Dehns**
**St Bride's House**
**10 Salisbury Square**
**London**
**EC4Y 8JD (GB)**

(56) References cited:
**EP-A- 0 347 128** **EP-A- 0 619 326**
**EP-A- 0 881 237** **WO-A-00/40620**
**WO-A-01/62847** **WO-A-96/16119**
**WO-A-99/45049** **US-B1- 6 221 981**

Remarks:
The file contains technical information submitted after the application was filed and not included in this specification

EP 1 448 633 B2

## Description

This invention relates to a new process for the manufacture of polyethylenes having long chain branching and in particular to a process for the preparation of a bimodal or multimodal polyethylene in which the long chain branching is present in certain molecular weight fractions.

Polymer chemists are constantly striving to produce polyolefins with improved properties, e.g. mechanical or optical properties, or with easier processability. Metallocene catalysts and other single site catalysts enable the production of controlled molecular structure polyolefins with narrow molecular weight distributions and polyolefins prepared using such catalyst species often possess improved mechanical properties. However, this improvement in mechanical properties is generally achieved only at the expense of a loss in processability.

There has therefore been much research into developing polyolefins having improved mechanical properties whilst maintaining satisfactory processability.

One way to improve processability of polyolefins is to modify their molecular structure by introducing long-chain branches into the polymer backbone. Whilst traditional Ziegler-Natta catalysts are not effective in introducing long chain branching into the polymer backbone, certain metallocene catalysts have been found to be effective in this regard. Unfortunately, when used in polymerisation these metallocene catalysts often give rise to polyolefins with unsatisfactory mechanical properties, especially where polymerisation is effected in a single stage. Moreover, whilst the processability of single site catalyst derived polyolefins is improved by the presence of the long chain branches, these polyolefins are still inferior in terms of processability to, for example, unimodal polyethylene produced using Ziegler catalysis and especially to low density polyethylene (LDPE) or bimodal linear polyethylene.

Long chain branching may be introduced into linear polyethylene by treating the polymer in the presence of a peroxide initiator in an extruder. However, this method suffers from severe drawbacks in that, for example, it is difficult to control the extent of long chain branching in the polymer and it does not allow tailoring to ensure that only a certain molecular weight component, e.g. the high molecular weight component, comprises the long chain branching.

There therefore still remains a need for a polyolefin preparation process in which long chain branching can be introduced to enhance processability without detriment to mechanical properties and particularly a process in which long chain branching can be introduced selectively in a particular polyolefin molecular weight fraction in a bimodal or multimodal polyolefin.

Bimodal or multimodal polyolefins may be prepared by melt blending although to ensure satisfactory homogeneity it is preferred to use multistage polymerization processes, e.g. using two or more reactors in series.

Bimodal or multimodal polyolefins are advantageous in that they combine the good mechanical properties associated with a high molecular weight component with the processability associated with a low molecular weight component. However, for applications of certain polyolefins, e.g. polyethylene, to ensure desired toughness, strength and environmental stress cracking resistance, the relative proportions of the high and low molecular weight components need to be specifically tailored. The properties discussed above are more readily achieved by increasing the amount of high molecular weight fraction and this increase reduces the processability of the polyethylene. Hence it would be desirable if the high molecular weight fraction could be manufactured to possess improved processing properties.

WO00/40620 describes a multistage polymerisation in which a single site catalyst is employed where at least one stage of the polymerisation is effected in the absence of hydrogen.

It has now been surprisingly found that bimodal or multimodal polyethylene with excellent mechanical and processing properties may be prepared in a series of stages, preferably a series of reactors, e.g. two reactors, by carefully tailoring the reaction stages to ensure long chain branching is present only in a particular molecular weight fraction, e.g. the high molecular weight fraction.

Thus, viewed from one aspect the invention provides a process for the preparation of homo or copolymers of ethylene, said process comprising:

i) in a first polymerisation stage, continuously polymerising ethylene and optionally at least one $C_{3-10}$ α-olefin, the reaction mixture further comprising a diluent and a metallocene procatalyst of formula I:

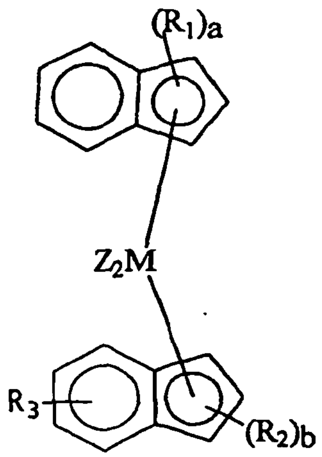

(I)

(wherein each $R_1$, which may be on either or both rings of the indenyl group, is independently selected from hydrogen, $C_{1-10}$ alkyl, $C_{3-8}$ cycloalkyl and siloxy;
a is 1 to 7;
each $R_2$ is independently selected from hydrogen, $C_{1-10}$ alkyl, $C_{3-8}$ cycloalkyl and siloxy;
$R_3$ is selected from hydrogen, $C_{1-10}$ alkyl, $C_{3-8}$ cycloalkyl and siloxy;
b is 1 to 3;
and an $R_1$ and an $R_2$ group or an $R_1$ and an $R_3$ group may together form a one, two, three or four atom bridge,
M is a transition metal of group IV to VIII; and each Z independently is hydrogen, $C_{1-10}$ alkyl, dialkylamido or halogen; at least one of $R_1$, $R_2$ and $R_3$ being siloxy), said first polymerisation stage being effected essentially in the absence of hydrogen and with an ethylene concentration of 0.005 to 25% mol relative to said diluent, preferably 0.005 to 4% mol to a yield a polymer slurry;
ii) in a second polymerisation stage continuously polymerising the polymer slurry resulting from said first polymerisation stage with hydrogen and the addition of further ethylene and optionally at least one $C_{3-10}$ $\alpha$-olefin;

wherein the first and second polymerization stages are so effected that the ratio of the weight of polymer produced in the first polymerisation stage to the weight of polymer produced in the second polymerisation stage is 0.1:99.9 to 20:80, that the polymer produced in the first polymerisation stage has long chain branches and that no further long chain branches are formed during the second polymerisation stage.

The parameters which can be varied in the two polymerization stages include: the nature of the reactor; the nature of the diluent; the nature of the comonomer, if any; the concentration of ethylene and any comonomer; the nature and content of the catalyst and any co-catalyst; reactor residence time; pressure; temperature; and hydrogen concentration.

In the process of the invention, the first polymerization stage is effected under conditions selected to ensure that the desired long chain branching is formed.

The first polymerisation stage may be conducted in solution, gas phase or slurry phase although preferably the first polymerisation stage is conducted as a slurry phase polymerisation. Where the first polymerisation stage is conducted as a slurry phase polymerisation, any suitable reactor may be used such as continuous stirred tank reactor or preferably a loop reactor. In a highly preferred embodiment the first polymerisation stage takes place in a pre-polymerisation reactor.

The first polymerisation stage may be carried out at any suitable temperature and pressure depending on the nature of the reactor employed. Conveniently however, it has been found that the formation of long chain branched polyethylenes occurs most effectively at relatively low polymerisation temperatures such as 20 to 75°C, preferably between 40 and 70°C. The pressure within the reactor may vary between 1 and 100 bars. Where the first polymerisation stage is carried out in a continuous stirred tank reactor the pressure within the reactor may preferably be between 1 and 25 bars. Where the first polymerisation stage is conducted in a loop reactor, the pressure may preferably be between 35 and 70 bars. Typically, the residence time should be between 10 to 60 minutes, e.g. 40 mins.

In a slurry polymerisation it is preferred to use an inert hydrocarbon diluent to form the slurry phase. The diluent, as with other polymerization techniques, is preferably a non-polar hydrocarbon which has no negative effect on the performance of the catalyst employed. As a diluent, a linear or cyclic saturated hydrocarbon such as butane, propane, pentane, hexane, heptane, octane, cyclohexane or methylcyclohexane, or an aromatic hydrocarbon such as benzene,

toluene, xylene or ethylbenzene, may be used. Of these compounds, aromatic hydrocarbons, in particular toluene, isobutane and $C_{5-10}$-linear hydrocarbons are preferred. The diluent should preferably be purified to remove traces of oxygen, moisture, carbon monoxide, carbon dioxide etc. as is well-known in the art since such impurities may have adverse effects on catalyst activity.

The catalyst employed in the first polymerisation stage comprises a metallocene procatalyst of formula I:

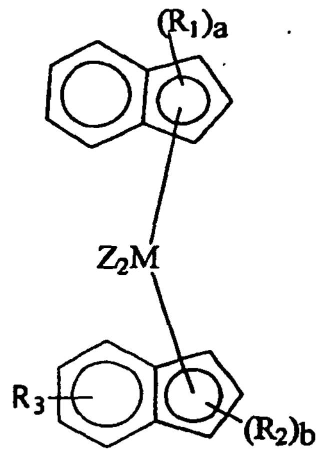

(I)

(wherein each $R_1$, which may be on either or both rings of the indenyl group, is independently selected from hydrogen, $C_{1-10}$ alkyl, $C_{3-8}$ cycloalkyl, and siloxy;
a is 1 to 7;
each $R_2$ is independently selected from hydrogen, $C_{1-10}$ alkyl, $C_{3-8}$ cycloalkyl and siloxy;
$R_3$ is selected from $C_{1-10}$ alkyl, $C_{3-8}$ cycloalkyl and siloxy;
b is 1 to 5;
or an $R_1$ and an $R_2$ group or an $R_1$ and an $R_3$ group may together form a one, two, three or four atom bridge, especially one where the bridging atoms are selected from C, Si and Ge e.g. a $CH_2CH_2$ group, a $-[Ge(R_4)_2]-$ group or more preferably a $-[Si(R_4)_2]-$ group where each $R_4$ independently is hydrogen, $C_{1-10}$ alkyl or $C_{3-8}$ cycloalkyl;
M is a transition metal of group IV to VIII; and each Z independently is hydrogen, $C_{1-10}$ alkyl, dialkylamido or halogen. Hence Z may be a group of formula $N(C_{1-8}\text{-alkyl})_2$.

In the compounds of formula I, two or more non-hydrogen $R_1$ and/or $R_2$ and/or $R_3$ groups may be present.

At least one $R_1$ and/or $R_2$ and/or $R_3$ group is a siloxy group, e.g. a trialkylsiloxy group, particularly a tri($C_{1-20}$ alkyl) siloxy group or an equivalent group in which one or more of the alkyl moieties is replaced by an alkenyl moiety.

Examples of suitable siloxy groups in the metallocene catalysts of the invention include

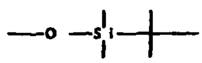

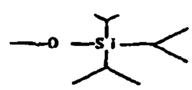

and

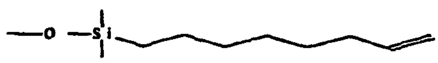

Preferably the transition metal, M is zirconium, titanium, hafnium or chromium, especially zirconium or titanium. Z is preferably chlorine.

It is also preferred that the compound of formula I is a complex of a bridged bis η-ligand, e.g. that a $CH_2CH_2$ or $Si(R_4)_2$ bridge be present, especially one where each $R_4$ is methyl.

Substituents $R_1$ and/or $R_2$ and/or $R_3$ which are not involved in bridging are preferably hydrogen, methyl, ethyl,

propyl or siloxy.

Particularly preferred metallocenes are $Et[Ind]_2ZrCl_2$, $[Ind]_2ZrCl_2$ and $Si(CH_3)_2[Ind]_2ZrCl_2$.

The metallocene procatalysts may be made by processes well documented in the prior art. The siloxy indenyl η-ligands used according to the invention may be prepared by reaction of a corresponding siloxyindene with an organolithium compound, e.g. methyllithium or butyllithium. The ligand can be metallated conventionally, e.g. by reaction with a halide of the metal M, preferably in an organic solvent, e.g. a hydrocarbon or a hydrocarbon/ether mixture. Bridged siloxy-indenyl ligands may be constructed by reacting a siloxy-monoindenyl ligand with a bridging agent (eg $Si(CH_3)_2Cl_2$) or with a bridging agent and a further η-ligand (eg a cyclopentadienyl ligand or with an indenyl ligand).

σ-ligands other than chlorine may be introduced by displacement of chlorine from an η-liganded metal chloride by reaction with appropriate nucleophilic reagent (e.g. methyl lithium or methylmagnesium chloride) or using, instead of a metal halide, a reagent such as tetrakisdimethylamidotitanium or metal compounds with mixed chloro and dimethylamido ligands.

Generally, the quantity of catalyst used will depend upon the nature of the catalyst, the reactor types and conditions and the properties desired for the polymer product. Conventional catalyst quantities, such as described in the publications referred to herein, may be used.

The metallocenes may be used in combination with co-catalysts known for use in olefin polymerisation processes. Suitable co-catalysts include alkyl aluminium compounds, in particular alumoxanes. Suitable alumoxanes include $C_{1-10}$ alkyl alumoxanes, e.g. methyl alumoxane (MAO) and isobutyl alumoxanes (e.g. HIBAO and TIBAO), especially MAO. Alumoxane co-catalysts are described by Hoechst in WO-A-94/28034. These are linear or cyclic oligomers having up to 40, preferably 3 to 20, -[Al(R")O]- repeat units (where R" is hydrogen, $C_{1-10}$ alkyl, preferably methyl or isobutyl, or $C_{6-18}$ aryl or mixtures thereof). While the aluminium alkyl compound may be an aluminium trialkyl (eg triethylaluminium (TEA)) or an aluminium dialkyl halide (eg diethyl aluminium chloride (DEAC)), it is preferably an alumoxane, particularly MAO, or an isobutylalumoxane, eg TIBAO (tetraisobutylalumoxane) or HIBAO (hexaisobutylalumoxane). Alternatively however the metallocene catalysts of the invention may be used with other cocatalysts, e.g. boron compounds such as $B(C_6F_5)_3$, $C_6H_5N(CH_3)_2H{:}B(C_6F_5)_4$, $(C_6H_5)_3C{:}B(C_6F_5)_4$ or $Ni(CN)_4[B(C_6F_5)_3]^{2-}{}_4$.

If desired the metallocene or metallocene/cocatalyst mixture may be used in unsupported form or it may be precipitated and used as such. However the metallocene or its reaction product with the cocatalyst is preferably introduced into the polymerization reactor in supported form, e.g. impregnated into a porous particulate support.

The particulate support material used is preferably an organic or inorganic material, e.g. a polymer (such as for example polyethylene, polypropylene, an ethylenepropylene copolymer, another polyolefin or polystyrene or a combination thereof). Such polymeric supports may be formed by precipitating a polymer or by a prepolymerization, eg of monomers used in the polymerization for which the catalyst is intended. However, the support is especially preferably a metal or pseudo metal oxide such as silica, alumina or zirconia or a mixed oxide such as silica-alumina, in particular silica, alumina or silica-alumina. Particularly preferably, the support material is acidic, e.g. having an acidity greater than or equal to silica, more preferably greater than or equal to silica-alumina and even more preferably greater than or equal to alumina. The acidity of the support material can be studied and compared using the TPD (temperature programmed desorption of gas) method. Generally the gas used will be ammonia. The more acidic the support, the higher will be its capacity to adsorb ammonia gas. After being saturated with ammonia, the sample of support material is heated in a controlled fashion and the quantity of ammonia desorbed is measured as a function of temperature.

Especially preferably the support is a porous material so that the metallocene may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 μm, more preferably 20 to 80 μm.

Before loading, the particulate support material is preferably calcined, i.e. heat treated, preferably under a non-reactive gas such as nitrogen. This treatment is preferably at a temperature in excess of 100°C, more preferably 200°C or higher, e.g. 200-800°C, particularly about 300°C. The calcination treatment is preferably effected for several hours, e.g. 2 to 30 hours, more preferably about 10 hours.

The support may be treated with an alkylating agent before being loaded with the metallocene. Treatment with the alkylating agent may be effected using an alkylating agent in a gas or liquid phase, e.g. in an organic solvent for the alkylating agent. The alkylating agent may be any agent capable of introducing alkyl groups, preferably $C_{1-6}$ alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, etc.

The quantity of alkylating agent used will depend upon the number of active sites on the surface of the carrier. Thus for example, for a silica support, surface hydroxyls are capable of reacting with the alkylating agent. In general, an excess of alkylating agent is preferably used with any unreacted alkylating agent subsequently being washed away.

Where an organoaluminium alkylating agent is used, this is preferably used in a quantity sufficient to provide

a loading of at least 0.1 mmol Al/g carrier, especially at least 0.5 mmol Al/g, more especially at least 0.7 mmol Al/g, more preferably at least 1.4 mmol Al/g carrier, and still more preferably 2 to 3 mmol Al/g carrier. Where the surface area of the carrier is particularly high, lower aluminium loadings may be used. Thus for example particularly preferred aluminium loadings with a surface area of 300-400 $m^2$/g carrier may range from 0.5 to 3 mmol Al/g carrier while at surface areas of 700-800 $m^2$/g carrier the particularly preferred range will be lower.

Following treatment of the support material with the alkylating agent, the support is preferably removed from the treatment fluid and any excess treatment fluid is allowed to drain off.

The optionally alkylated support material is loaded with the metallocene, preferably using a solution of the metallocene in an organic solvent therefor, e.g. as described in the patent publications referred to above. Preferably, the volume of metallocene solution used is from 50 to 500% of the pore volume of the carrier, more especially preferably 80 to 120%. The concentration of metallocene compound in the solution used can vary from dilute to saturated depending on the amount of metallocene active sites that it is desired be loaded into the carrier pores.

The active metal (ie. the metal of the metallocene) is preferably loaded onto the support material at from 0.1 to 4%, preferably 0.5 to 3.0%, especially 1.0 to 2.0%, by weight metal relative to the dry weight of the support material.

After loading of the metallocene onto the support material, the loaded support may be recovered for use in olefin polymerization, e.g. by separation of any excess metallocene solution and if desired drying of the loaded support, optionally at elevated temperatures, e.g. 25 to 80°C.

Alternatively, a cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the metallocene, for example by including the co-catalyst in the solution of the metallocene or, by contacting the metallocene loaded support material with a solution of the cocatalyst or catalyst activator, e.g. a solution in an organic solvent. Alternatively however, any such further material may be added to the metallocene loaded support material in the polymerization reactor or shortly before dosing of the catalyst material into the reactor.

In this regard, as an alternative to an alumoxane it may be preferred to use a fluoroborate catalyst activator, especially a $B(C_6F_5)_3$ or more especially a $^{\ominus}B(C_6F_5)_4$ compound, such as $C_6H_5N(CH_3)_2H{:}B(C_6F_5)_4$ or $(C_6H_5)_3C{:}B(C_6F_5)_4$. Other borates of general formula $(cation^+)_a$ a $(borate^-)_b$ where a and b are positive numbers, may also be used.

Where such a cocatalyst or catalyst activator is used, it is preferably used in a mole ratio to the metallocene of from 0.1:1 to 10000:1, especially 1:1 to 50:1, particularly 1:2 to 30:1. More particularly, where an alumoxane cocatalyst is used, then for an unsupported catalyst the aluminium:metallocene metal (M) molar ratio is conveniently 2:1 to 10000:1, preferably 50:1 to 1000:1. Where the catalyst is supported the Al:M molar ratio is conveniently 2:1 to 10000:1 preferably 50:1 to 400:1. Where a borane cocatalyst (catalyst activator) is used, the B:M molar ratio is conveniently 2:1 to 1:2, preferably 9:10 to 10:9, especially 1:1. When a neutral triarylboron type cocatalyst is used the B:M molar ratio is typically 1:2 to 500:1, however some aluminium alkyl would normally also be used. When using ionic tetraaryl borate compounds, it is preferred to use carbonium rather than ammonium counterions or to use B:M molar ratio below 1:1.

Where the further material is loaded onto the metallocene loaded support material, the support may be recovered and if desired dried before use in olefin polymerization.

Whilst it is envisaged that catalysts in addition to the metallocene descried above may be employed, e.g. a further metallocene catalyst or a Ziegler catalyst, it is preferred if the polymerisation takes place in the presence of a single metallocene catalyst.

Catalysts may be introduced to the first polymerisation stage either intermittently or continuously using methods known in the art. For example, an intermittent method to feed catalysts into a reactor is disclosed in EP-A-428054 and a continuous method disclosed in EP-A-576503 both of which are herein incorporated by reference.

The olefin monomer employed in the polymerisation is ethylene optionally together with comonomers such as propylene, 1-butene, 1-hexene, 1-octene etc. Diolefins may also be employed as comonomers especially those having two terminal double bonds, e.g. butadiene. The use of such polyenes forms a preferred aspect of the invention. Ethylene and comonomers may be introduced into the reactor by any conventional means and these are preferably introduced continuously.

The first polymerisation stage must be carried out at low monomer concentration. Without wishing to be limited be theory, it is believed that by using a low concentration of ethylene in the reaction fluid, a polymer with high molecular weight and long chain branching will be formed. Thus, where the first polymerisation stage takes place in the slurry phase, the ethylene concentration in the reaction mixture employed in the first reaction stage should be between 0.005 and 4% mol, preferably 0.01 and 2% mol, especially between 0.1 and 1% mol relative to the diluent employed. If the first stage if the polymerisation takes place in the gas phase, ethylene concentration should be between 5 to 15% mol.

Where a comonomer is introduced, e.g. to control the density of the polymer, the molar ratio of comonomer to ethylene may be between 0 and 1.

Hydrogen should not be present in the first polymerisation stage since hydrogen causes the formation of saturated end groups which cannot participate in subsequent polymerisation and hence reduces the formation of long

chain branching.

The second polymerisation stage may be conducted in solution, slurry or in gas phase. Whilst the second polymerisation stage may be carried out in the same reactor as the first polymerisation stage it is preferred if a second reactor is employed. Moreover, it is preferred if the second polymerisation stage is effected in slurry phase also, especially where the first polymerisation stage is a prepolymerisation. The polymerisation conditions in the second polymerisation stage are selected so that the polymer recovered from the second stage has the desired properties, for instance the required density and melt flow rate.

Transfer of the reaction mixture from first to second polymerisation stage may be effected by conventional means well-known to the person skilled in the art.

The temperature of the second polymerisation stage may be selected to obtain as high a catalyst efficiency as possible whilst still maintaining a stable process to achieve desired product properties. For example, the temperature is typically higher than in the first polymerisation stage but lower than the melting temperature of the polymer being manufactured. A typical range would be 50 to 110°C, preferably 70 to 100°C.

The pressure in the second polymerisation stage again depends on the nature of the reactor. Where the second polymerisation stage is effected in a continuous stirred tank reactor the pressure may be 3 to 30 bars, preferably 4 to 20 bars. Where the second stage is effective in a loop reactor, the pressure may be 30 to 70 bars, preferably 40 to 65 bars. If the polymerisation stage is effected in a gas phase reactor, the pressure is between 5 to 40 bars, preferably between 10 to 30 bars. A typical residence time for a loop or tank reactor is 30 to 80 mins, e.g. 40 mins. For a gas phase reactor residence time is around 1 to 5 hours, e.g. 3 hours.

In a particularly preferred embodiment, the second polymerisation stage is effected in a loop reactor since polymerisation may be conducted under super critical conditions at a temperature and pressure which are higher than the corresponding critical properties of the fluid. When using super critical conditions it is desirable to use propane as the diluent and preferably employ 1-butene as comonomer.

If the second polymerisation phase is conducted in a gas phase reactor, suitable reactors would include vertical stirred bed reactors, a horizontal stirred bed reactor or a fluidised bed reactor. This latter reactor may of course be equipped with a mechanical stirrer.

It is preferred to employ hydrogen in the second stage to help control molecular weight as well as to prevent the formation of long chain branches. The use of hydrogen is well-known to the person skilled in the art. Hydrogen may be used at a molar ratio of hydrogen to ethylene of 1 to 1000 ppm (i.e. from 1 to 1000 moles of hydrogen per million moles of ethylene).

Whilst the process has been described for two reactors, the person skilled in the art will of course realise that three or more reactors could be used.

The polyethylene homo or copolymer produced by the process of the invention will generally have excellent mechanical and processing properties. Likewise improvements in melt rheological behaviour, and particle morphology will generally be achieved.

The weight ratio of the amount of polymer produced in the first polymerisation stage to the amount of polymer produced in the second polymerisation stage is 0.1:99.9 to 20:80, preferably 0.5:99.5 to 15:85, especially 1:99 to 12:88. The polymer produced in the first polymerisation stage has long chain branches and essentially no further long chain branches are formed during the second polymerisation stage.

The molecular weight of the polymers produced by a process of the invention may range from 50,000 to 500,000 g/mol, and have a density of 900 to 975 $kg/m^3$. In general, the high molecular weight component is formed in the first reaction stage and has a molecular weight of 50,000 to 500,000 g/mol, preferably 100,000 to 500,000 g/mol.

The molecular weight distribution of the polymers produced by the invention may be 1.8 to 10. The melt index of the polymers produced by a process of the invention may range from 0.01 to 2000 g/10min.

The presence of long chain branching can be detected indirectly using techniques described below. In particular, the presence of long chain branching can be inferred by comparing the rheology of the polymer (especially the shear thinning behaviour (SHI) and the elasticity modulus (G')) with molecular weight distribution as measured by GPC. Typically, rheology and MWD should behave similarly so that polymers having broad MWD also have a high value of SHI and G'. Also, the absolute molecular weight has some influence on SHI and G' so polymers with a high molecular weight have a higher value of SHI and G' compared to polymers with a low molecular weight. A combination of low MW and a high value of SHI and/or G' is an indication of long chain branching in the polymer.

Detection of long chain branching is discussed comprehensively in Macromolecules 1998, 31, 8448-8454 (Malmberg et al), Macromolecules 1998, 31, 3639-3647 (Vega et al), Macromolecules 1999, 32, 8454-8464 (Shroff et al) and Macromolecules 1996, 29, 8280-8281 (Carella).

It is preferred if the polymer produced in the first polymerisation stage has a relatively low number of long chain branches, e.g. 0.1 to 4 long chain branches per 1000 carbon atoms, especially 0.5 to 2 long chain branches per 1000 carbons.

All publications referred to herein are hereby incorporated by reference.

The invention will now be illustrated further by reference to the following non-limiting Examples.

## Experimental

### Melt Flow Rate

Melt flow rate, abbreviated as MFR, denotes the weight of the polymer extruded through a standard die at specific temperature and under specified load. The subscript indicates the load, e.g. $MFR_2$ has been measured under 2.16 kg load at 190°C. The method is described in ISO 1133 C4, ASTM D 1238 and DIN 53735.

### Molecular Weight Distribution (MWD)

Molecular weight distribution was measured using Waters 150 C GPC (gel permeation chromatography) instrument, with two mixed bed columns and one $10^7$ A column and Waters 150 D RI detector. As solvent, 1,2,4-trichlorobenzene (TCP) was used. The measurement was performed at 135°C. The instrument was calibrated with narrow MWD polystyrene standard and broad MWD polyethylene standard.

### Dynamic Rheology

The rheology of polymers has been determined using Rheometrics RDA II Dynamic Rheometer. The measurements have been carried out at 190 °C under nitrogen atmosphere. The measurements give storage modulus (G') and loss modulus (G") together with absolute value of complex viscosity (η*) as a function of frequency (ω) or absolute value of complex modulus (G*) .

$$\eta^* = \sqrt{(G'^2 + G''^2)}/\omega$$

$$G^* = \sqrt{(G'^2 + G''^2)}$$

According to Cox-Merz rule complex viscosity function, η*(ω) is the same as conventional viscosity function (viscosity as a function of shear rate), if frequency is taken in rad/s. If this empirical equation is valid absolute value of complex modulus corresponds shear stress in conventional (that is steady state) viscosity measurements. This means that function η*(G*) is the same as viscosity as a function of shear stress.

In the present method viscosity at a low shear stress or η* at a low G* (which serve as an approximation of so called zero viscosity) is used as a measure of average molecular weight. On the other hand, shear thinning, that is the decrease of viscosity with G*, gets more pronounced the broader is molecular weight distribution. This property can be approximated by defining a so-called shear-thinning index, SHI, as a ratio of viscosities at two different shear stresses. In the examples below the shear stresses (or G*) 0 and 100 kPa have been used. Thus:

$$SHI_{0/100} = \eta^*_0/\eta^*_{100}$$

where

$\eta^*_0$ is the zero shear rate viscosity
$\eta^*_{100}$ is complex viscosity at G* = 100 kPa

As mentioned above storage modulus function, G'(ω), and loss modulus function, G"(ω), are obtained as primary functions from dynamic measurements. The value of the storage modulus at a specific value of loss modulus increases with broadness of molecular weight distribution. However this quantity is highly dependent on the shape of molecular weight distribution of the polymer. In the examples the value of G' at G" = 5 kPa is used.

**Example 1: pre-polymerization**

**Catalyst preparation**

168 g of a metallocene complex (bridged siloxy-substituted bis-indenyl zirconium dichloride, according to a patent application FI 960437) and 9.67 kg of a 30% MAO solution, supplied by Albemarle were combined and 3.18kg dry, purified toluene was added. The thus obtained complex solution was added on 9 kg of silica carrier SP9-243, supplied by Grace. The complex was fed very slowly with uniform spraying during 2 hours. Temperature was kept below 30 °C. The mixture was allowed to react for 2 hours after complex addition at 30°C.

The thus obtained catalyst was dried under nitrogen for 6 h at 75°C temperature. After nitrogen drying, the catalyst was further dried under vacuum for 10 h.

**Prepolymerisation**

Polymerization was carried out in a 5-liter Buchi autoclave in 3500ml i-butane. The ethylene partial pressure was 1.9-2.3 bar, 1-hexene was fed continuously together with ethylene, with a hexene/ethylene ratio of 71.4 mol/kmol, hydrogen content 0 mol/kmol, the temperature was 50°C and the reaction time was 240 min. 363 mg of the catalyst was fed to the autoclave. After 240 min of polymerization the yield of polyethylene was 33 g giving a catalyst activity of 0.02 kg PE/g cat h.

Polymer properties can be found in Table 2.

**Example 2: pre-polymerization**

Prepolymerisation step:

Polymerization was carried out in a 3-liter. Buchi autoclave in 1800ml i-butane. The ethylene partial pressure was 1 bar, 1-butene content was 10 ml (batchwise addition), hydrogen content 0 mol/kmol the temperature was 50°C and the reaction time was 45 min. 211 mg of the catalyst (prepared as in Example 1) was fed to the autoclave. After 45 min of polymerization the estimated yield of polyethylene was 3.5 g giving a catalyst activity of 0.02 kg PE/g cat h. in the first prepolymerisation step.

**Example 3: pre-polymerization + slurry**

Prepolymerisation step:

Polymerization was carried out in a 3-liter Buchi autoclave in 1800ml i-butane. The ethylene partial pressure was 1 bar, 1-butene content was 10 ml (batchwise addition), hydrogen content 0 mol/kmol the temperature was 50°C and the reaction time was 45 min. 171 mg of the catalyst (prepared as in Example 1) was fed to the autoclave. After 45 min of polymerization the estimated yiel of polyethylene was 4 g giving a catalyst activity of 0.02 kg PE/g cat h. in the first prepolymerisation step.

Reaction was continued in second step immediately after prepolymerisation:

**Slurry step:**

Polymerization was continued in a 3-liter Buchi autoclave in 1800ml i-butane. The ethylene partial pressure was increased to 5 bar, 1-butene content was 40 ml (batchwise addition), hydrogen content 0 mol/kmol, the temperature was 80°C and the reaction time was 60 min. After 60 min of polymerization the yield of polyethylene was 289 g giving a catalyst activity of 1.68 kg PE/g cat h. in the slurry step.

The split between prepol/slurry is 1.4/98.6 %/%

Polymer properties can be found in Table 2.

**Example 4: pre-polymerization**

Prepolymerisation step:

Polymerization was carried out in a 3-liter Buchi autoclave in 1800ml i-butane. The ethylene partial pressure was 2 bar, 1-butene content was 10 ml (batchwise addition), hydrogen content 0 mol/kmol the temperature was 50°C and the reaction time was 45 min. 271 mg of the catalyst (prepared as in Example 1) was fed to the autoclave. After 45

min of polymerization the estimated yield of polyethylene was 6.4 g giving a catalyst activity of 0.02 kg PE/g cat h. in the first prepolymersation step.

**Example 5: pre-polymerization**

Prepolymerisation step:

Polymerization was carried out in a 3-liter Buchi autoclave in 1800ml i-butane. The ethylene partial pressure was 2 bar, 1-butene content was 10 ml (batchwise addition), hydrogen content 0 mol/kmol the temperature was 30°C and the reaction time was 45 min. 238 mg of the catalyst (prepared as in Example 1) was fed to the autoclave. After 45 min of polymerization the estimated yield of polyethylene was 2 g giving a catalyst activity of 0.01 kg PE/g cat h. in the first prepolymersation step.

**Example 6: pre-polymerization + slurry**

Prepolymerisation step:

Polymerization was carried out in a 3-liter Buchi autoclave in 1800ml i-butane. The ethylene partial pressure was 2 bar, 1-butene content was 10 ml (batchwise addition), hydrogen content 0 mol/kmol the temperature was 30°C and the reaction time was 45 min. 240 mg of the catalyst (prepared as in Example 1) was fed to the autoclave. After 45 min of polymerization the estimated yield of polyethylene was 2 g giving a catalyst activity of 0.01 kg PE/ g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-butene content was 40 ml (batchwise addition), hydrogen content 0 mol/kmol, the temperature was 80°C and the reaction time was 60 min. After 60 min of polymerization the yield of polyethylene was 440 g giving a catalyst activity of 1.8 kg PE/g cat h. in the slurry step.

The split between prepol/slurry is 0,5/99.5 %/%

Polymer properties can be found in Table 2.

**Example 7: Pre-polymerization**

Prepolymerisation step:

Polymerization was carried out in a 3-liter Buchi autoclave in 1800ml i-butane. The ethylene partial pressure was 1 bar, 1-butene content was 10 ml (batchwise addition), hydrogen content 0 mol/kmol the temperature was 30°C and the reaction time was 45 min. 311 mg of the catalyst (prepared as in Example 1) was fed to the autoclave. After 45 min of polymerization the estimated yield of polyethylene was 2 g giving a catalyst activity of 0.01 kg PE/g cat h. in the first prepolymersation step.

**Example 8: pre-polymerization + slurry**

Prepolymerisation step (conditions same like example 6):

Polymerization was carried out in a 3-liter Buchi autoclave in 1800ml i-butane. The ethylene partial pressure was 1 bar, 1-butene content was 10 ml (batchwise addition), hydrogen content 0 mol/kmol the temperature was 30°C and the reaction time was 45 min. 120 mg of the catalyst (prepared as in Example 1) was fed to the autoclave. After 45 min of polymerization the estimated yield of polyethylene was 1 g giving a catalyst activity of 0.008 kg PE/g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-butene content was 40 ml (batchwise addition), hydrogen content 0 mol/kmol, the temperature

was 80°C and the reaction time was 60 min. After 60 min of polymerization the yield of polyethylene was 231 g giving a catalyst activity of 1.9 kg PE/g cat h. in the slurry step.

The split between prepol/slurry is 0.35/99.5 %/%

Polymer properties can be found in Table 2.

**Example 9: pre-polymerization**

Prepolymerisation step:

Polymerization was carried out in a 3-liter Buchi autoclave in 1800ml i-butane. The ethylene partial pressure was 1 bar, 1-hexene content was 10 ml (batchwise addition), hydrogen content 0 mol/kmol the temperature was 30°C and the reaction time was 45 min. 216 mg of the catalyst (prepared as in Example 1) was fed to the autoclave. After 45 min of polymerization the yield of polyethylene was 1.2 g giving a catalyst activity of 0.01 kg PE/g cat h. in the prepolymersation step.

**Example 10: pre-polymerization + slurry**

Prepolymerisation step:

Polymerization was carried out in a 3-liter Buchi autoclave in 1800ml i-butane. The ethylene partial pressure was 1 bar, 1-hexene content was 10 ml (batchwise addition), hydrogen content 0 mol/kmol the temperature was 30°C and the reaction time was 45 min. 130 mg of the catalyst (prepared as in Example 1) was fed to the autoclave. After 45 min of polymerization the estimated yield of polyethylene was 0,7 g giving a catalyst activity of 0.006 kg PE/ g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 152 g giving a catalyst activity of 1.2 kg PE/g cat h. in the slurry step.

The split between prepol/slurry is 0.44/99.56 %/%

Polymer properties can be found in. Table 2.

**Example 11: pre-polymerization + slurry**

Prepolymerisation step:

Polymerization was carried out in a 3-liter Buchi autoclave in 1800ml i-butane. The ethylene partial pressure was 0.5 bar, 1-hexene content was 0 ml, hydrogen content 0 mol/kmol the temperature was 15°C and the reaction time was 30 min. 126 mg of the catalyst (prepared as in Example 1) was fed to the autoclave. After 30 min of polymerization the estimated yield of polyethylene was 0.5 g giving a catalyst activity of 0.004 kg PE/ g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 284 g giving a catalyst activity of 2.25 kg PE/g cat h. in the slurry step.

The split between prepol/slurry is 0.2/99.8 %/%

Polymer properties can be found in Table 2.

**Example 12: pre-polymerization**

Prepolymerisation step:

Polymerization was carried out in a 3-liter Buchi autoclave in 1800ml i-butane. The ethylene partial pressure was 1 bar, 1-hexene content was 0 ml, hydrogen content 0 mol/kmol the temperature was 30°C and the reaction time was 15 min. 317 mg of the catalyst (prepared as in Example 1) was fed to the autoclave. After 15 min of polymerization the yield of polyethylene was 1.5 g giving a catalyst activity of 0.02 kg PE/g cat h. in the first prepolymersation step.

Polymer properties can be found in Table 2.

**Example 13: pre-polymerization + slurry**

Prepolymerisation step:

Polymerization was carried out in a 3-liter Buchi autoclave in 1800ml i-butane. The ethylene partial pressure was 1 bar, 1-hexene content was 0 ml, hydrogen content 0 mol/kmol the temperature was 30°C and the reaction time was 45 min. 138 mg of the catalyst (prepared as in Example 1) was fed to the autoclave. After 45 min of polymerization the estimated yield of polyethylene was 5.0 g giving a catalyst activity of 0.04 kg PE/g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 150 g giving a catalyst activity of 1.1 kg PE/g cat h. in the slurry step.

The split between prepol/slurry is 3/97 %/%

Polymer properties can be found in Table 2.

**Example 14: pre-polymerization**

Prepolymerisation step:

Polymerization was carried out in a 3-liter Buchi autoclave in 1800ml i-butane. The ethylene partial pressure was 2 bar, 1-hexene content was 0 ml, hydrogen content 0 mol/kmol the temperature was 50°C and the reaction time was 30 min. 358 mg of the catalyst (prepared as in Example 1) was fed to the autoclave. After 30 min of polymerization the yield of polyethylene was 7 g giving a catalyst activity of 0.02 kg PE/g cat h. in the prepolymersation step.

Polymer properties can be found in Tables 2 and 3.

**Example 15 : pre-polymerization + slurry**

Prepolymerisation step:

Polymerization was carried out in a 3-liter Buchi autoclave in 1800ml i-butane. The ethylene partial pressure was 2 bar, 1-hexene content was 0 ml, hydrogen content 0 mol/kmol the temperature was 50°C and the reaction time was 30 min. 142 mg of the catalyst (prepared as in Example 1) was fed to the autoclave. After 30 min of polymerization the estimated yield of polyethylene was 1.2 g giving a catalyst activity of 0.01 kg PE/g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 112 g giving a catalyst activity of 0,8 kg PE/g cat h. in the slurry step.

The split between prepol/slurry is 1/99 %/%

Polymer properties can be found in Tables 2 and 3.

**Example 16: pre-polymerization + slurry**

Prepolymerisation step:

Polymerization was carried out in a 3-liter Buchi autoclave in 1800ml i-butane. The ethylene partial pressure was 1 bar, 1-hexene content was 0 ml, hydrogen content 0 mol/kmol the temperature was 50°C and the reaction time was 45 min. 143 mg of the catalyst (prepared as in Example 1) was fed to the autoclave. After 45 min of polymerization the estimated yield of polyethylene was 1.5 g giving a catalyst activity of 0.01 kg PE/g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 146 g giving a catalyst activity of 1.0 kg PE/g cat h. in the slurry step.

The split between prepol/slurry is 1/99 %/%

Polymer properties can be found in Table 2.

**Example 17: pre-polymerization + slurry**

Prepolymerisation step:

Polymerization was carried out in a 3-liter Buchi autoclave in 1800ml i-butane. The ethylene partial pressure was 1 bar, 1-hexene content was 0 ml, hydrogen content 0 mol/kmol the temperature was 50°C and the reaction time was 30 min. 148 mg of the catalyst (prepared as in Example 1) was fed to the autoclave. After 30 min of polymerization the estimated yield of polyethylene was 1.5 g giving a catalyst activity of 0.01 kg PE/g cat h. in the first prepolymersation step.

Reaction was continued in second step immediately after prepolymerisation:

Slurry step:

Polymerization was continued in a 3-liter Buchi autoclave in 1800ml i-butane. The ethylene partial pressure was increased to 5 bar, 1-hexene content was 40 ml (batchwise addition), hydrogen content 0 mol/kmol, the temperature was 80°C and the reaction time was 60 min. After 60 min of polymerization the yield of polyethylene was 180 g giving a catalyst activity of 1.2 kg PE/g cat h. in the slurry step.

The split between prepol/slurry is 1/99 %/%

Polymer properties can be found in Tables 2 and 3.

**Comparative Example 1: Ziegler-Natta Polymerisation**

Catalyst preparation.

The Ziegler-Natta polymerisation catalyst was prepared as follows:

Preparation of Mg-complex

7.9 g (60.8 mmol) of 2-ethyl-1-hexanol was added slowly to 27.8 g (33.2 mmol) of 19.9 % butyl-octyl-magnesium. The reaction temperature was kept under 35°C. This complex was used in the following catalyst preparations. 2-ethyl-1-hexanol/butyl-octyl-magnesium -ratio is 1.83:1.

Preparation of solid catalyst component

3.7 g (1.0 mmol/g carrier) of 20 % EADC was added to 5.9 g of Sylopol 5510 silica/$MgCl_2$ -carrier having average particle size of 20 μm and the mixture was stirred for one hour at 30°C. 5.7 g (0.9 mmol/g carrier) of complex

prepared in complex preparation was added and the mixture was stirred for 4 hours at 35-45°C. 0.6 g (0.55 mmol/g carrier) of $TiCl_4$ was added and the mixture was stirred for 5 hours at 45°C. The catalyst was dried at 45-80 °C for 3 hours.

Slurry polymerisation

Polymerisation was performed in a 3-liter Büchi autoclave in 1800 ml pentane. The ethylene partial pressure was set to 4.4 bar, no comonomer was used, hydrogen partial pressure was set to 0.01 bar and the temperature was set to 90 °C. Polymerisation was initiated by injecting 28.5 mg of catalyst prepared above together with 0.3 ml of 10% solution of triethylaluminum in heptane (corresponding to Al/Ti molar ratio of 16) into the autoclave. After 60 min of polymerisation the run was terminated and the yield of polyethylene was found to be 464 g giving a catalyst activity of 16.3 kg PE/ g cat.

**Conclusion of examples**

The reference material of Comparative Example 1, produced by using a Ziegler-Natta catalyst, is a linear polymer without long chain branches. As seen in Table 3, the polymer of Example 1, obtained in prepolymerisation, clearly has a higher SHI and $G'_{2kPa}$ than the reference material, while it has a lower molecular weight and a narrower molecular weight distribution. This indicates the presence of long chain branches.

The data of Examples 15 and 17 shows that also these polymers have higher SHI and $G'_{2kPa}$ than the reference material. Further, also they have a lower molecular weight and a narrower MWD. It is thus apparent that also these polymers contain long chain branches. It is also apparent from the rheology data of Example 1 and that of Examples 15 and 17, that essentially all the long chain branches were formed in the prepolymerisation step and no further long chain branches were formed in the slurry polymerisation.

It is thus apparent that the method of the invention is suitable for producing an ethylene polymer having a very small amount of long chain branches, which does not have a negative impact on the mechanical properties of the polymer but improves the processability.

Table 1

| | Prepolym. | | | | | Slurry Polymerization | |
|---|---|---|---|---|---|---|---|
| Ex. | Comonomer | Comonomer amount, ml | Temp. ° C | Time min | $C_2$-press., bar | Performed | Comonomer |
| 1 | 1-hexene | 71[1] | 50 | 240 | 2 | No | - |
| 2 | 1-butene | 10 | 50 | 45 | 1 | No | - |
| 3 | 1-butene | 10 | 50 | 45 | 1 | Yes | 1-butene |
| 4 | 1-butene | 10 | 50 | 45 | 2 | No | - |
| 5 | 1-butene | 10 | 30 | 45 | 2 | No | - |
| 6 | 1-butene | 10 | 30 | 45 | 2 | Yes | 1-butene |
| 7 | 1-butene | 10 | 30 | 45 | 1 | No | - |
| 8 | 1-butene | 10 | 30 | 45 | 1 | Yes | 1-hexene |
| 9 | 1-hexene | 10 | 30 | 45 | 1 | No | - |
| 10 | 1-hexene | 10 | 30 | 45 | 1 | Yes | 1-hexene |
| 11 | - | 0 | 15 | 30 | 0.5 | Yes | 1-hexene |
| 12 | - | 0 | 30 | 15 | 1 | No | - |
| 13 | - | 0 | 30 | 45 | 1 | Yes | 1-hexene |
| 14 | - | 0 | 50 | 30 | 2 | No | - |
| 15 | - | 0 | 50 | 30 | 2 | Yes | 1-hexene |
| 16 | - | 0 | 50 | 45 | 1 | Yes | 1-hexene |

(continued)

| | Prepolym. | | | | | Slurry Polymerization | |
|---|---|---|---|---|---|---|---|
| Ex. | Comonomer | Comonomer amount, ml | Temp. ° C | Time min | $C_2$-press., bar | Performed | Comonomer |
| 17 | - | 0 | 50 | 30 | 1 | Yes | 1-hexene |

Prepolymerization in isobutane diluent.
Slurry polymerization conditions:
Comonomer amount 40 ml, temperature 80 °C, reaction time 60 min, ethylene partial pressure 5 bar, isobutane diluent volume 1800 ml.
Notes:
[1] Continuous feed of comonomer, unit mol of comonomer/kmol of ethylene

**Table 2**

| Ex. | Comonomer (w%) | DSC, Melt Temp. °C | DSC, Cry'11 i-nity % | DSC, Cryst. Temp. °C | $MFR_{21.6}$ g/10 min | $MFR_{2.16}$ 9/10 min | $M_n$ g/mol | $M_w$ g/mol | $M_z$ g/mol | $M_w/M_n$ |
|---|---|---|---|---|---|---|---|---|---|---|
| 1 | 5,1 | 120,4 | 40,9 | 108 | 4,8 | | 48500 | 144000 | 334000 | 3 |
| 2 | 7.7[1] | 98.9 | 33.2 | 91.9 | | | 38100 | 173000 | 579000 | 4.5 |
| 3 | | 117,7 | 40,6 | 105,8 | 4,09 | | | | | |
| 4 | 1.8[1] | 121.9 | 45.4 | 109.9 | 4,09 | | 63000 | 177000 | 400000 | 2.8 |
| 5 | 1.2[1] | 123.7 | 43,2 | 109.7 | | | 83300 | 251000 | 690000 | 3 |
| 6 | | 120.3 | 43,5 | 107,4 | 2,2 | | | | | |
| 7 | 2.7 | 120.5 | 36.8 | 108.8 | | | 57200 | 153000 | 366000 | 2.7 |
| 8 | | 114,6 | 39,9 | 100,7 | 4,3 | 0.14 | | | | |
| 9 | 1.7 | 126.8 | 49.1 | 116.6 | | | 11900 | 67000 | 175000 | 5.6 |
| 10 | | 117,0 | 41,5 | 104,1 | 6,8 | 0.26 | | | | |
| 11 | | | | | | | | | | |
| 12 | | 130.3 | 40.7 | 116.5 | | | 64600 | 296000 | 1393000 | 4.6 |
| 13 | | | | | | | | | | |
| 14 | | 131.8 | 51 | 116.8 | | | 77200 | 263000 | 642000 | 3.4 |
| 15 | | | | | 4 | 0.11 | | | | |
| 16 | | 119,3 | 46,1 | 107,4 | | | | | | |
| 17 | | | | | 5,2 | 0.18 | | | | |

Notes:
[1] 1-butene used as comonomer

**Table 3**

| Ex. | $\eta_{1kPa}$ | $SHI_{1/1}$ | $G'_{2kPa}$ | $MFR_{21}$. | $MFR_{2.1}$ | $M_n$ | $M_w$ | $M_z$ | $M_w/M_n$ |
|---|---|---|---|---|---|---|---|---|---|
| 1 | 224000 | 32.0 | 1480 | 4.8 | N.M. | 48500 | 144000 | 334000 | 3 |
| 14 | N.M. | N.M. | N.M. | N.M. | N.M. | 77200 | 263000 | 642000 | 3.4 |
| 15 | 118000 | 7.6 | 930 | 4 | 0.11 | 59700 | 179000 | N.M. | 3.0 |
| 16 | 85500 | 7.8 | 930 | 5.2 | 0.18 | 53800 | 172000 | N.M. | 3.2 |
| CE1 | 78900 | 4.7 | 550 | 4.4 | | 43600 | 240000 | | 5.5 |

## Claims

**1.** A process for the preparation of homo or copolymers of ethylene, said process comprising:

i) in a first polymerisation stage, continuously polymerising ethylene and optionally at least one $C_{3-10}$ $\alpha$-olefin, the reaction mixture further comprising a diluent and a metallocene procatalyst of formula I:

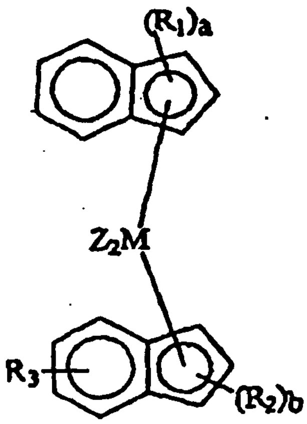

(I)

(wherein each $R_1$, which may be on either or both rings of the indenyl group, is independently selected from hydrogen, $C_{1-10}$ alkyl, $C_{3-8}$ cycloalkyl and siloxy;
a is 1 to 7;
each $R_2$ is independently selected from hydrogen, $C_{1-10}$ alkyl, $C_{3-8}$ cycloalkyl and siloxy;
$R_3$ is selected from hydrogen, $C_{1-10}$ alkyl, $C_{3-8}$ cycloalkyl and siloxy;
b is 1 to 3;
and an $R_1$ and an $R_2$ group or an $R_1$ and an $R_3$ group may together form a one, two, three or four atom bridge, M is a transition metal of group IV to VIII; and each z independently is hydrogen, $C_{1-10}$ alkyl, dialkylamido or halogen;
at least one of $R_1$, $R_2$ and $R_3$ being siloxy),
said first polymerisation stage being effected essentially in the absence of hydrogen and with an ethylene concentration of 0.005 to 25% mol relative to said diluent to a yield a polymer slurry;
ii) in a second polymerisation stage continuously polymerising the polymer slurry resulting from said first polymerisation stage with hydrogen and the addition of further ethylene and optionally at least one $C_{3-10}$ $\alpha$-olefin;

wherein the first and second polymerization stages are so effected that the ratio of the weight of polymer produced in the first polymerisation stage to the weight of polymer produced in the second polymerisation stage is 0.1:99.9 to 20:80, that the polymer produced in the first polymerisation stage has long chain branches and that no further long chain branches are formed during the second polymerisation stage.

**2.** A process as claimed in claim 1 wherein the homo or copolymer of ethylene is bimodal and the higher molecular

weight component comprising said long chain branches is produced in the first stage.

**3.** A process as claimed in claim 1 or 2 wherein said first stage takes place in a prepolymerisation reactor.

**4.** A process as claimed in claim 3 wherein the temperature in the prepolymerisation reactor during said first stage is between 40°C and 70°C.

**5.** A process as claimed in any one of claims 1 to 4 wherein said diluent is toluene, isobutane or a $C_{5-10}$-linear hydrocarbon.

**6.** A process as claimed in claim 1 to 5 wherein in said procatalyst $R_1$ and an $R_2$ group together form a $CH_2CH_2$ or a -$[Si(R_4)_2]$- bridge where each $R_4$ independently is hydrogen, $C_{1-10}$ alkyl or $C_{3-8}$ cycloalkyl.

**7.** A process as claimed in claim 1 to 6 wherein in said procatalyst at least one $R_1$ and/or $R_2$ group is a tri($C_{1-20}$ alkyl) siloxy group or an equivalent group in which one or more of the alkyl moieties is replaced by an alkenyl moiety.

**8.** A process as claimed in any one of claims 1 to 7 wherein in said procataylst Z is chlorine and M is Zr, Ti, Cr or Hf.

**9.** A process as claimed in any one of claims 1 to 8 wherein said polymerisation takes place in the presence of a cocatalyst.

**10.** A process as claimed in any one of claim 1 to 9 wherein said first stage takes place in the slurry phase and the ethylene concentration in the stage is between 0.01 to 2% mol relative to the diluent.

**11.** A process as claimed in any one of claim 1 to 9 wherein said second stage takes place in the slurry phase in a reactor different from that used to effect the first stage.

**12.** A process as claimed in any one of claim 1 to 11 wherein 1 to 1000 moles of hydrogen is employed per million moles of ethylene.

**13.** A process as claimed in any one of claim 1 to 12 wherein said second stage takes place in a loop reactor at supercritical conditions, the diluent being propane and the comonomer being 1-butene.

## Patentansprüche

**1.** Verfahren zum Herstellen von Homo- oder Copolymeren von Ethylen, wobei das Verfahren umfaßt:

i) in einer ersten Polymerisationsstufe kontinuierliches Polymerisieren von Ethylen und gegebenenfalls mindestens einem $C_{3-10}$-$\alpha$-Olefin, wobei das Reaktionsgemisch ferner ein Verdünnungsmittel und einen Metallocen-Prokatalysator der Formel I umfaßt:

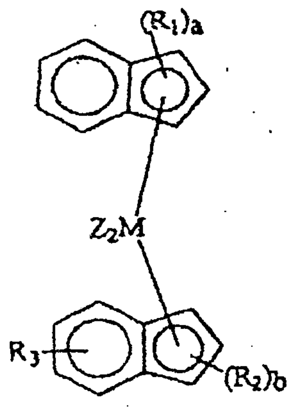

(I)

(worin $R_1$, das an einem Ring oder beiden Ringe der Indenylgruppe vorliegen kann, jeweils unabhängig voneinander aus Wasserstoff, $C_{1-10}$-Alkyl, $C_{3-8}$-Cycloalkyl und Siloxy ausgewählt ist;
a gleich 1 bis 7 ist;
$R_2$ jeweils unabhängig voneinander aus Wasserstoff, $C_{1-10}$-Alkyl, $C_{3-8}$-Cycloalkyl und Siloxy ausgewählt ist;
$R_3$ aus Wasserstoff, $C_{1-10}$-Alkyl, $C_{3-8}$-Cycloalkyl und Siloxy ausgewählt ist;
b gleich 1 bis 3 ist;
und ein Rest $R_1$ und ein Rest $R_2$ oder ein Rest $R_1$ und ein Rest $R_3$ zusammen eine Brücke mit einem, zwei, drei oder vier Atomen bilden können,
M ein Übergangsmetall der Gruppen IV bis VIII ist; und
z jeweils unabhängig voneinander Wasserstoff, $C_{1-10}$-Alkyl, Dialkylamido oder Halogen ist;
mindestens einer der Reste $R_1$ $R_2$ und $R_3$ Siloxy ist), wobei die erste Polymerisationsstufe im wesentlichen ohne Wasserstoff und bei einer Ethylenkonzentration von 0,005 bis 25 Mol-% im Verhältnis zum Verdünnungsmittel durchgeführt wird, um eine Polymersuspension zu erhalten;
ii) in einer zweiten Polymerisationsstufe kontinuierliches Polymerisieren der aus der ersten Polymerisationsstufe resultierenden Polymersuspension mit Wasserstoff und Zugeben von weiterem Ethylen und gegebenenfalls mindestens einem $C_{3-10}$-$\alpha$-Olefin;

wobei die erste und die zweite Polymerisationsstufe so erfolgen, daß das Verhältnis zwischen dem Gewicht des in der ersten Polymersationsstufe erzeugten Polymers und dem Gewicht des in der zweiten Polymerisationsstufe erzeugten Polymers 0,1:99,9 bis 20:80 beträgt, daß das in der ersten Polymerisationsstufe erzeugte Polymer langkettige Verzweigungen aufweist und daß während der zweiten Polymerisationsstufe keine weiteren langkettigen Verzweigungen erzeugt werden.

2. Verfahren nach Anspruch 1, wobei das Homo- oder Copolymer von Ethylen bimodal ist und die Komponente mit höherem Molekulargewicht, die die langkettigen Verzweigungen aufweist, in der ersten Stufe erzeugt wird.

3. Verfahren nach Anspruch 1 oder 2, wobei die erste Stufe in einem Vorpolymerisationsreaktor stattfindet.

4. Verfahren nach Anspruch 3, wobei die Temperatur im Vorpolymerisationsreaktor während der ersten Stufe 40 bis 70°C beträgt.

5. Verfahren nach einem der Ansprüche 1 bis 4, wobei das Verdünnungsmittel Toluol, Isobutan oder ein linearer $C_{5-10}$-Kohlenwasserstoff ist.

6. Verfahren nach den Ansprüchen 1 bis 5, wobei in dem Prokatalysator $R_1$ und ein Rest $R_2$ zusammen eine $CH_2CH_2$- oder eine -[Si($R_4$)$_2$]-Brücken bilden, wobei $R_4$ jeweils unabhängig Wasserstoff, $C_{1-10}$-Alkyl oder $C_{3-8}$-Cycloalkyl ist.

7. Verfahren nach den Ansprüchen 1 bis 6, wobei in dem Prokatalysator zumindest ein Rest $R_1$ und/oder ein Rest $R_2$ eine Tri($C_{1-20}$-alkyl)siloxy-Gruppe oder eine äquivalente Gruppe ist, worin ein oder mehrere der Alkyleinheiten durch eine Alkenyleinheit ersetzt sind.

8. Verfahren nach einem der Ansprüche 1 bis 7, wobei in dem Prokatalysator Z Chlor ist und M gleich Zr, Ti, Cr oder Hf ist.

9. Verfahren nach einem der Ansprüche 1 bis 8, wobei die Polymerisation in Gegenwart eines Cokatalysators erfolgt.

10. Verfahren nach einem der Ansprüche 1 bis 9, wobei die erste Stufe in der Suspensionsphase erfolgt und die Ethylenkonzentration in der Stufe 0,01 bis 2 Mol-% beträgt, und zwar auf das Verdünnungsmittel bezogen.

11. Verfahren nach einem der Ansprüche 1 bis 9, wobei die zweite Stufe in der Suspensionsphase in einem Reaktor stattfindet, der sich von dem unterscheidet, der für die Durchführung der ersten Stufe verwendet wird.

12. Verfahren nach einem der Ansprüche 1 bis 11, wobei 1 bis 1000 Mole Wasserstoff pro Million Mole Ethylen verwendet werden.

13. Verfahren nach einem der Ansprüche 1 bis 12, wobei die zweite Stufe in einem Reaktor mit geschlossenem Kreis bei superkritischen Bedingungen erfolgt, das Verdünnungsmittel Propan ist und das Comonomer 1-Buten ist.

## Revendications

**1.** Procédé de préparation d'homo ou copolymères d'éthylène, ledit processus comprenant :

i) dans une première étape de polymérisation, la polymérisation continue d'éthylène et facultativement d'au moins une α-oléfine en $C_{3-10}$, le mélange réactionnel comprenant en outre un diluant et un procatalyseur métallocène de formule I :

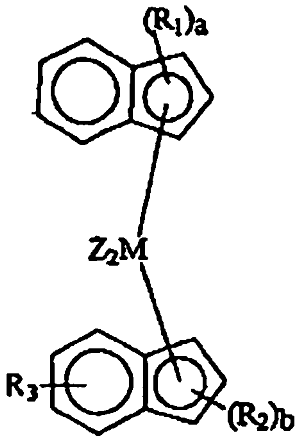

(I)

(dans laquelle chaque $R_1$, qui peut être sur l'un ou l'autre des ou les deux cycles du groupe indényle, est indépendamment choisi parmi l'hydrogène, un alkyle en $C_{1-10}$, un cycloalkyle en $C_{3-8}$ et un siloxy ;
a vaut de 1 à 7 ;
chaque $R_2$ est indépendamment choisi parmi l'hydrogène, un alkyle en $C_{1-10}$, un cycloalkyle en $C_{3-8}$ et un siloxy ;
$R_3$ est choisi parmi l'hydrogène, un alkyle en $C_{1-10}$, un cycloalkyle en $C_{3-8}$ et un siloxy ;
b vaut de 1 à 3 ;
et un groupe $R_1$ et un groupe $R_2$ ou un groupe $R_1$ et un groupe $R_3$ peuvent conjointement former un pont à un, deux, trois ou quatre atomes,
M est un métal de transition du groupe IV à VIII ; et chaque Z est indépendamment l'hydrogène, un alkyle en $C_{1-10}$, un dialkylamido ou un halogène ;
au moins un de $R_1$, $R_2$ et $R_3$ étant un siloxy),
ladite première étape de polymérisation étant réalisée sensiblement en l'absence d'hydrogène et avec une concentration en éthylène de 0,005 à 25 % en moles par rapport audit diluant pour donner une suspension épaisse de polymère ;
ii) dans une seconde étape de polymérisation, la polymérisation continue de la suspension de polymère résultant de ladite première étape de polymérisation avec de l'hydrogène et l'addition de davantage d'éthylène, et facultativement d'au moins une α-oléfine en $C_{3-10}$ ;

dans lequel les première et seconde étapes de polymérisation sont réalisées de manière à ce que le rapport en poids du polymère produit dans la première étape de polymérisation sur le rapport en poids du polymère produit dans la seconde étape de polymérisation est de 0,1/99,9 à 20/80, à ce que le polymère produit dans la première étape de polymérisation ait des ramifications à longues chaînes et à ce que sensiblement pas de ramifications à longues chaînes supplémentaires ne soient formées durant la seconde étape de polymérisation.

**2.** Procédé selon la revendication 1, dans lequel l'homo ou le copolymère d'éthylène est bimodal et le composant à masse moléculaire plus élevée comprenant lesdites ramifications à longues chaînes est produit durant la première étape.

**3.** Procédé selon la revendication 1 ou 2, dans lequel ladite première étape a lieu dans un réacteur de prépolymérisation.

**4.** Procédé selon la revendication 3, dans lequel la température dans le réacteur de prépolymérisation durant ladite première étape est comprise entre 40°C et 70°C.

**5.** Procédé selon l'une quelconque des revendications 1 à 4, dans lequel ledit diluant est le toluène, l'isobutane ou un hydrocarbure linéaire en $C_{5-10}$.

**6.** Procédé selon l'une quelconque des revendications 1 à 5, dans lequel dans ledit procatalyseur, un groupe $R_1$ et un groupe $R_2$ forment conjointement un pont $CH_2CH_2$ ou $-[Si(R_4)_2]-$, où chaque $R_4$ est indépendamment l'hydrogène, un alkyle en $C_{1-10}$ ou un cycloalkyle en $C_{3-8}$.

**7.** Procédé selon les revendications 1 à 6, dans lequel dans ledit procatalyseur, au moins un groupe $R_1$ et/ou $R_2$ est un tri(alkyle en $C_{1-20}$) siloxy ou un groupe équivalent, dans lequel un ou plusieurs des groupes fonctionnels alkyles est remplacé par un groupe fonctionnel alcényle.

**8.** Procédé selon l'une quelconque des revendications 1 à 7, dans lequel dans ledit procatalyseur, Z est le chlore et M est Zr, Ti, Cr ou Hf.

**9.** Procédé selon l'une quelconque des revendications 1 à 8, dans lequel ladite polymérisation a lieu en présence d'un cocatalyseur.

**10.** Procédé selon l'une quelconque des revendications 1 à 9, dans lequel ladite première étape a lieu dans la phase de suspension épaisse et la concentration en éthylène à cette étape est comprise entre 0,01 et 2 % en moles par rapport au diluant.

**11.** Procédé selon l'une quelconque des revendications 1 à 9, dans lequel ladite seconde étape a lieu dans la phase de suspension épaisse dans un réacteur différent de celui utilisé pour réaliser la première étape.

**12.** Procédé selon l'une quelconque des revendications 1 à 11, dans lequel de 1 à 1000 moles d'hydrogène sont utilisées pour 1 million de moles d'éthylène.

**13.** Procédé selon l'une quelconque des revendications 1 à 12, dans lequel ladite seconde étape a lieu dans un réacteur en boucle dans des conditions supercritiques, le diluant étant du propane et le comonomère étant du 1-butène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0040620 A
- WO 9414856 A
- WO 9512622 A
- WO 9600243 A